# EUROPÄISCHE PATENTSCHRIFT

(11) **EP 1 703 185 B1**
(45) Veröffentlichungstag und Bekanntmachung des Hinweises auf die Patenterteilung: **27.02.2008**
(21) Anmeldenummer: 06001655.7
(22) Anmeldetag: 26.01.2006
(51) Int. Cl.: F16K 31/06, F16K 1/12, F16K 1/42

(54) **Coaxialventil**
Coaxial valve
Soupape coaxiale

(30) Priorität: 17.03.2005 DE 102005012851
(43) Veröffentlichungstag der Anmeldung: 20.09.2006
(73) Patentinhaber: müller co-ax ag, 74670 Forchtenberg (DE)
(72) Erfinder: Frank, Roland, 74219 Möckmühl (DE)
(74) Vertreter: LENZING GERBER

(56) Entgegenhaltungen:
- EP-A- 0 892 202
- DE-A1- 19 837 694
- DE-C- 951 691

## Beschreibung

Die vorliegende Erfindung betrifft ein Coaxialventil mit den Merkmalen des Oberbegriffs des Anspruch 1.

Coaxialventile sind in den verschiedensten Ausführungsformen bekannt. Sie sind entweder direkt- oder fremdgesteuert. In der Regel verfügen sie über eine Ventilfeder, die das Steuerrohr in Richtung des Ventilsitzes druckbeaufschlagt, so dass bei abgeschaltetem Antrieb das Ventil schließt. Der Ventilsitz ist bei den bekannten Coaxialventilen fest im Gehäuse angeordnet und ist aus Verschleißgründen meist aus einem harten Dichtwerkstoff, wie z.B. PTFE, PEEK oder Vespel®, hergestellt.

Im häufigsten Einsatzfall des Coaxialventils steuert dieses ein von der Steuerrohrseite "A" eintretendes unter Druck stehendes Medium, wobei dieses nur dann zur Ventilausgangsseite "B" gelangt, sofern der Ventilantrieb das Steuerrohr vom Ventilsitz wegbewegt.

Sofern das Coaxialventil geschlossen ist, kann es aufgrund von Druckschwankungen auf der Steuerohrseite "A" oder der Ventilausgangsseite "B" zu einem unerwünschten Öffnen des Ventils kommen, indem das Steuerrohr gegen die Ventilfederkraft vom Ventilsitz weggedrückt wird.

Aus der DE 951691 C1 ist ein Coaxialventil mit einem Gehäuse bekannt, in dem ein Steuerrohr und ein Ventilsitz angeordnet ist, wobei das Steuerrohr in axialer Richtung verschieblich gelagert ist und mit seiner Stirnseite mit dem Ventilsitz zum Verschließen des Coaxialventils zusammenwirkt, wobei der Ventilsitz in axialer Richtung des Steuerrohrs verschieblich gelagert ist. Der axial verschiebliche Ventilsitz bildet zusammen mit dem Steuerrohr gleichsam ein Rückschlagventil. Sofern am Ventilausgang ein erhöhter Druck auftritt, wird der Ventilsitz somit in Richtung des Steuerohres bewegt.

Aufgabe der vorliegenden Erfindung ist es, ein Coaxialventil bereitzustellen, bei dem die Schließkraft der Ventilfeder bei einer Druckerhöhung im Ventileingang automatisch vergrößert wird.

Diese Aufgabe wird mit einem Coaxialventil mit den Merkmalen des Anspruchs 1 gelöst. Weitere vorteilhafte Ausbildungen des erfindungsgemäßen Coaxialventils ergeben sich durch die Merkmale der Unteransprüche.

Der Erfindung liegt der Gedanke zugrunde, dass sich die Ventilfederkraft beim Zusammendrücken erhöht. Aus diesem Grunde sieht die Erfindung vor, dass der Ventilsitz verschieblich entlang der Achse des Steuerrohres gelagert ist, und dass das gesteuerte Medium dazu genutzt wird, den Ventilsitz in Richtung des Steuerrohres mit Druck zu beaufschlagen. Sofern sich der Druck des gesteuerten Mediums erhöht, wird der Ventilsitz in Richtung des Steuerrohres gedrückt, wodurch die Ventilfeder weiter zusammengedrückt wird und sich somit die Schließkraft erhöht. Hierzu ist ein Verbindungskanal vorzusehen, welcher den Steuerrohrinnenraum mit der Rückseite des Ventilsitzes verbindet. Ferner ist darauf zu achten, dass die dem Steuerrohr abgewandte Fläche des Ventilsitzes, welche dem Mediumsdruck ausgesetzt ist, größer ist, als die dem Steuerrohr zugewandte und ebenfalls dem Mediumsdruck ausgesetzte Fläche des Ventilsitzes, so dass der Ventilsitz stets in Richtung des Steuerrohres druckbeaufschlagt ist.

Hierzu ist es besonders vorteilhaft, wenn der ringförmige Ventilsitz von einem am Gehäuse angeordneten Teil durchgriffen ist, welches zudem den Ventilsitz innen lagert. Dieses den Ventilsitz durchgreifende Teil hat vorteilhaft einen nach außen weisenden Kragen. Zwischen dem Kragen und dem Ventilsitz kann eine umlaufende Dichtung angeordnet sein, welche verhindert, dass das druckbeaufschlagte Medium vom Steuerrohrinnenraum in einen Zwischenraum zwischen Ventilsitz und dem Kragen des durchgreifenden Teils gelangt. Der Ventilsitz begrenzt dabei vorteilhaft mit seiner gesamten Rückseite den insbesondere umlaufenden Kanal, welcher über den Verbindungskanal mit dem Steuerrohrinnenraum in Verbindung ist. Die zwischen Kragen und Ventilsitz angeordnete umlaufende Dichtung ist dabei vorteilhaft kompressibel ausgestaltet, so dass sie der axial gerichteten Bewegung des Ventilsitzes folgen kann und stets die Dichtfunktion zwischen Kragen und Ventilsitz aufrechterhalten bleibt.

Der Ventilsitz ist vorteilhaft ein ringförmiges Teil, welches in einem an seiner äußeren und inneren Mantelfläche mittels ebenfalls ringförmiger Dichtungen am Gehäuse abdichtend anliegt, so dass das Medium nicht um den Ventilsitz herum fließen kann.

Der Verbindungskanal ist vorteilhaft durch zwei Bohrungen zu realisieren, wobei die eine Bohrung axial im den Ventilsitz durchgreifenden kragenförmigen Teil bis in den sich daran anschließenden zylindrischen Teil eingebracht wird, wobei die axiale Bohrung eine insbesondere radial verlaufende Bohrung kreuzt, die wiederum im zum Ventilsitz rückwärtigen umlaufenden Kanal endet.

Um ein Zusetzen und Verschmutzen des Verbindungskanals aufgrund von Verunreinigungen im zu steuernden Medium sicher zu vermeiden, ist es ebenfalls möglich, das der Verbindungskanal mittels einer Membran verschlossen ist, so dass das vom Coaxialventil gesteuerte Medium nicht in den Verbindungskanal gelangen kann. Der Verbindungskanal sowie der zum Ventilsitz rückwärtig angeordnete Kanal ist bei dieser Ausführungsform mittels eines Hydraulikmedium gefüllt, so dass über die Membran der im Steuerrohrinnenraum herrschende Druck auf das Hydraulikmedium übertragen wird.

Ebenso ist es möglich, einen Filter vorzusehen, welches eine Verschmutzung des Verbindungskanals verhindert.

Um eine Schließkrafterhöhung auch bei einer Druckerhöhung am Ventilausgang "B" zu realisieren um die Abdichtwirkung zwischen Steuerrohr und Ventilsitz zu verbessern, kann das Steuerrohr derart ausgebildet sein, dass der dem Ventilsitz zugewandte stirnseitige Bereich des Steuerrohres einen größeren Außendurchmesser aufweist, als der sich daran anschließende Bereich des Steuerrohres. Der so vom Steuerrohr gebildete Kragen bzw. Absatz dient als Angriffsfläche für das im Ventilausgang "B" unter Druck stehende Medium, wodurch das Steuerrohr in Richtung Ventilsitz zusätzlich druckbeaufschlagt wird. Hierdurch wird vorteilhaft eine Gegendruck-Dichtheit gewährleistet.

Es ist selbstverständlich möglich, das erfindungsgemäße Coaxialventil direkt oder fremd zu steuern.

Nachfolgend werden zwei mögliche Ausführungsformen des erfindungsgemäßen Coaxialventils anhand von Figuren näher erläutert.

Es zeigen:
- Fig. 1:: Eine Querschnittsdarstellung durch ein erfindungsgemäßes Coaxialventil;
- Fig. 1a:: Ausschnittsvergrößerung der Darstellung gem. Fig. 1;
- Fig. 1b:: Ausschnittsvergrößerung der Darstellung gem. Fig. 1 zur Erläuterung einer optionalen Steuerrohrausbildung;
- Fig. 2:: Alternative Ausgestaltung des Ventilsitzes.

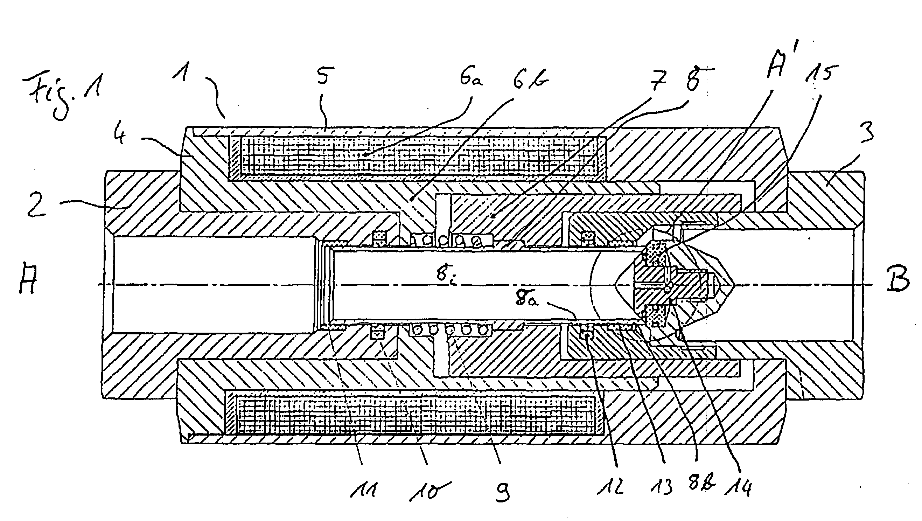

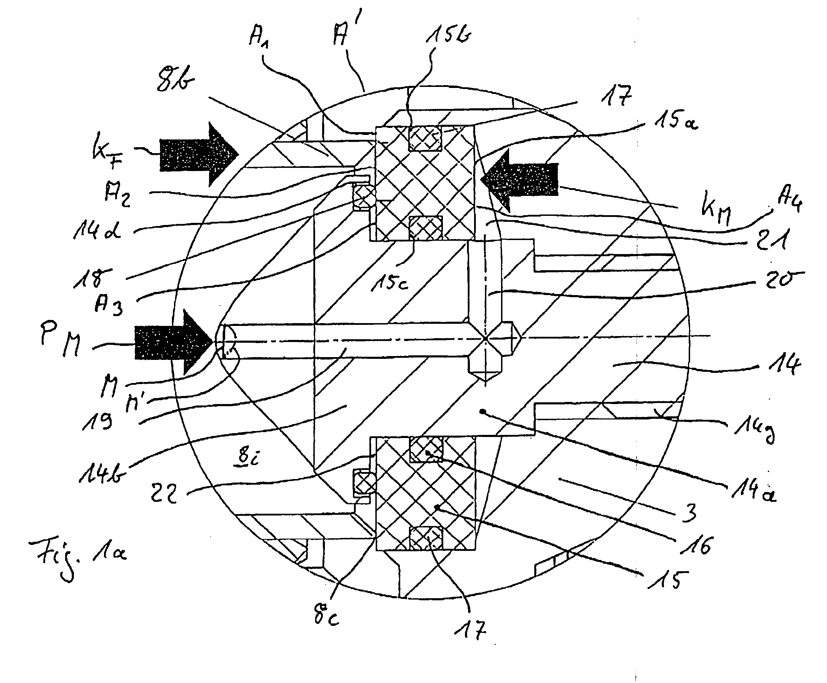

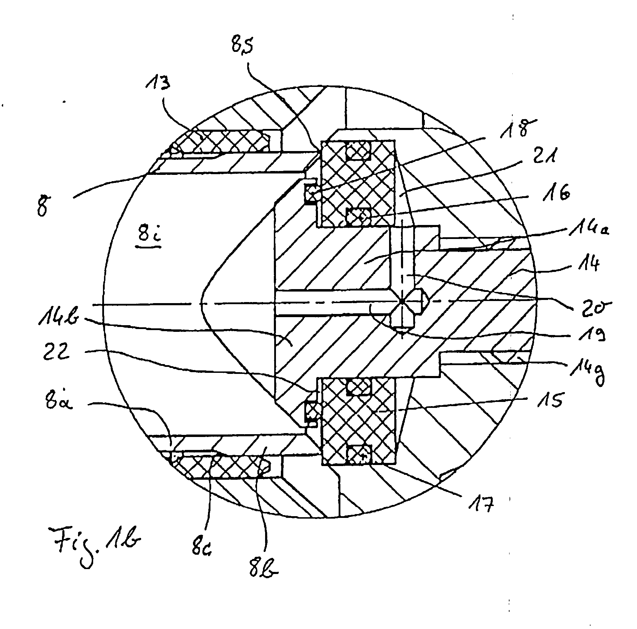

Die Figur 1 zeigt eine Querschnittsdarstellung durch ein erfindungsgemäßes Coaxialventil 1, bestehend aus einem Ventileingangsflansch 2 und einem Ventilausgangsflansch 3 zwischen denen das Ventilgehäuse 4,5 angeordnet ist. In dem Ventilgehäuse ist der Ventilantrieb, bestehend aus einem Elektromagneten 6a und dem zugehörigen Stator 6b sowie dem Anker 7 mit daran befestigtem Steuerrohr 8, angeordnet. Das Steuerrohr 8 wird von der Ventilfeder 9 in Richtung Ventilsitz 15 druckbeaufschlagt, wobei sich die Ventilfeder einerseits am Ventilgehäuse 4 und andererseits am Steuerrohr 8 abstützt. Der Steuerrohrinnenraum 8ᵢ ist mit dem Ventileingangsflansch 2 in Verbindung, wodurch das zu steuernde Medium über den Ventileingangsflansch 2 und das Steuerrohr 8 in Richtung Ventilsitz 15 gelangt. Das Steuerrohr 8 ist mittels Gleitlagern 11, 13 im Ventilgehäuse gelagert, wobei dynamische Dichtungen 10, 12 ein Eindringen des gesteuerten Mediums in den Antriebsraum verhindern. Der Ventilsitz 15 ist ein ringförmiges Teil, welcher zwischen einem den Ventilsitz 15 durchgreifenden Teil 14 und dem Ventilausgangsflansch 3 in axialer Richtung gelagert ist.

Die Figur 1a zeigt eine Ausschnittsvergrößerung des Ausschnitts A der Figur 1. Der Ventilsitz 15 ist als ringförmiges Teil ausgebildet und weist an seiner inneren Mantelfläche umlaufende Nuten 15b, 15c auf, in denen Dichtungen 16, 17 einliegen, welche ihrerseits abdichtend an dem Gehäuse des Coaxialventils anliegen. Mit dem Ausgangsflansch 3 ist ein den Ventilsitz 15 durchgreifendes Teil 14 fest verbunden, welches einen Verbindungskanal 19, 20 aufweist, der von der von der Steuerrohrinnenseite 8ᵢ hin zu einem Ringkanal 21 führt, der an der Rückseite 15a des Ventilsitzes 15 angeordnet ist und sich über die gesamte radiale Breite des Ventilsitzes 15 erstreckt. Über den Verbindungskanal 19, 20 gelangt das gesteuerte Medium von der Ventileingangsseite zur Rückseite 15a des Ventilsitzes 15. Dadurch dass das gesteuerte Medium unter einem Druck P_{M} steht, erzeugt es eine Kraft K_{M} in Richtung des Steuerrohrs 8. Der Verbindungskanal 19, 20 ist durch eine axialgerichtete Bohrung 19 sowie durch eine radialgerichtete Bohrung 20 gebildet, wobei sich die Bohrungen innerhalb des durchgreifenden Teils 14 kreuzen. Das durchgreifende Teil 14 weist einen zylindrischen Teil 14a und einen sich in das Steuerrohr hineinragenden kragenförmigen Bereich 14b auf, wobei in dem Kragen 14b eine umlaufende Nut 14d angeordnet ist, welche hin zum Ventilsitz 15 geöffnet ist und in der ein Dichtring 18 einliegt. Das durchgreifende Teil 14 weist ein Außengewinde 14g zur Befestigung an dem Ausgangsflansch 3 auf, welches mit einem Innengewinde des Ausgangsflansches 3 zusammenwirkt.

Die axiale Abmessung des Ventilsitzes 15 ist so bemessen, dass der Ventilsitz unter Verformung des Dichtringes 18 in Richtung des Steuerrohres aufgrund der Kraft K_{M} bewegbar ist. Aufgrund des Dichtringes 18 ist die Fläche A₂, auf die der Druck P_{M} bei geschlossenem Ventil wirkt, kleiner als die Fläche A₄, so dass der Ventilsitz eine Kraft erfährt, die ihn in Richtung des Steuerrohres drückt. Die Dichtung 18 verhindert, dass unter Druck stehende gesteuerte Medium in den Raum 22 zwischen den Dichtungen 18 und 16 gelangen kann, so dass stets gewährleistet ist, dass der Ventilsitz 15 unter Verformung des Dichtringes 18 in Richtung des Steuerrohres verschiebbar ist.

Optional kann im Eingangsbereich der Bohrung 19 eine Membran M angeordnet werden, welche verhindert, dass das vom Ventil gesteuerte Medium in den Verbindungskanal 19, 20 gelangt. In diesem Falle muss der Verbindungskanal 19, 20 sowie der Ringkanal 21 mit einem Hydraulikmedium vorab gefüllt werden, so dass über die verformte Membran M' der Ventilsitz 15 bewegbar ist.

Optional ist es möglich, statt der Membran einen Filter vorzusehen, um zu verhindern, dass sich der Verbindungskanal durch Verschmutzung zusetzt.

Wie in Figur 1b dargestellt, kann das Steuerrohr 8 an seinem dem Ventilsitz 15 zugewandten Ende einen Endbereich 8b mit einem ersten Außendurchmesser aufweisen, an den sich ein Bereich 8a mit einem kleineren zweiten Außendurchmesser anschließt. Der durch die unterschiedlichen Außendurchmesser der beiden aneinander grenzenden Bereiche 8a, 8b gebildete Kragen 8c, dient als Angriffsfläche für ein durch das Gleitlager 13 hindurch getretene Medium der Ventilausgangsseite "B". Das auf den Kragen 8c drückende Medium erzeugt eine Kraft, welche das Steuerrohr 8 in Richtung des Ventilsitzes 15 kraftbeaufschlagt und somit die Schließkraft des Coaxialventils erhöht.

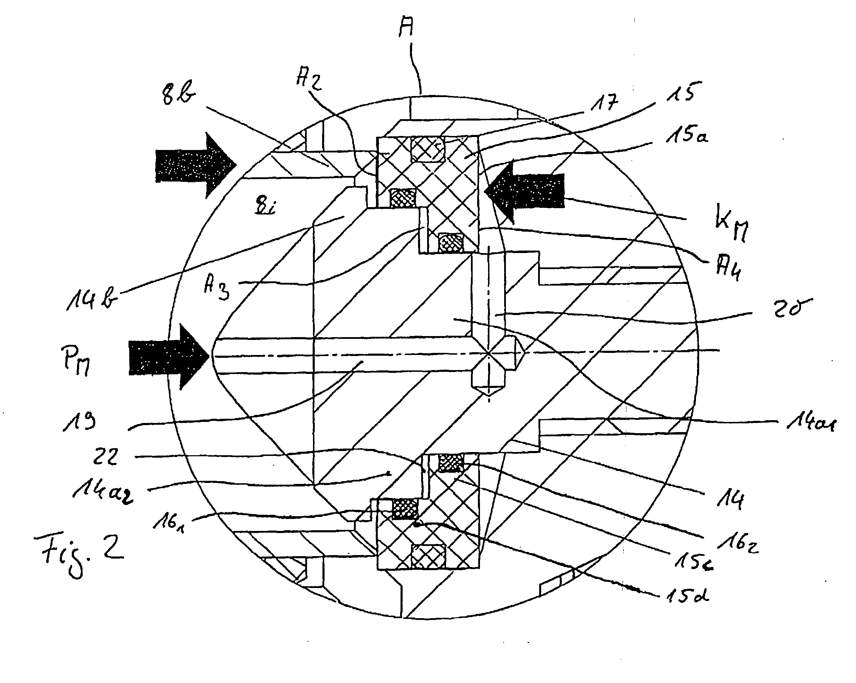

Die Figur 2 zeigt eine alternative Ausgestaltung des Ventilsitzes 15, wobei die bei der Figur 1a im kragenförmigen Bereich 14b des durchgreifenden Teils 14 angeordnete Dichtung 18 nunmehr im Ventilsitz 15 als Dichtung 16₁ angeordnet ist. Damit sich eine Flächendifferenz zwischen den Flächen A₂ und A₄ ergibt, ist die Dichtung 16₁ radial weiter außen als die Dichtung 16₂ anzuordnen. Der Ventilsitz 15 weist somit zwei Bereiche 15c und 15d mit unterschiedlichen Innendurchmessern auf, welche mittels der Dichtungen 16₁ und 16₂ abdichtend an den zylindrischen Abschnitten 14a₁ und 14a₂ des durchgreifenden Teils 14 anliegen.

Auch bei dieser Ausgestaltung kann optional eine Membran sowie zusätzliches Hydraulikmedium oder ein Filter vorgesehen werden.

Alternative Ausgestaltungen sind ebenfalls möglich, wobei der Ventilsitz nicht einstückig sondern mehrteilig ausgebildet sein kann. Auch kann der Verbindungskanal durch das Gehäuse geführt werden.

## Patentansprüche

1. Coaxialventil (1) mit einem Gehäuse, in dem ein Steuerohr (8) und ein Ventilsitz (15) angeordnet ist, wobei das Steuerrohr (8) in axialer Richtung verschieblich gelagert ist und mit seiner Stirnseite (8s) mit dem Ventilsitz (15) zum Verschließen des Coaxialventils (1) zusammenwirkt, **wobei** der Ventilsitz (15) in axialer Richtung des Steuerrohres (8) verschieblich gelagert ist, und dass das im Steuerrohr (8) unter Druck (P_{M}) stehende Medium den Ventilsitz (15) in Richtung des Steuerrohres (8) druckbeaufschlagt, **dadurch gekennzeichnet, dass** ein Verbindungskanal (19, 20) den Steuerrohrinnenraum (8i) mit der dem Steuerrohr (8) abgewandten Seite (15a) des Ventilsitzes (15) verbindet und dass die dem Steuerrohr (8) abgewandte Seite des Ventilsitzes (15a) einen ringförmigen Kanal (21) begrenzt, welcher über den den Ventilsitz (15) durchgreifenden Verbindungskanal (19, 20) mit dem Steuerrohrinnenraum (8i) in Verbindung ist.

2. Coaxialventil (1) nach Anspruch 1, **dadurch gekennzeichnet, dass** der Ventilsitz (15) ringförmig ist, wobei der Verbindungskanal (19, 20) den Ring (15) durchgreift.

3. Coaxialventil (1) nach Anspruch 1 oder 2, **dadurch gekennzeichnet, dass** der Ventilsitz (15) ein Dichtelement aufweist oder durch ein Dichtelement gebildet ist.

4. Coaxialventil (1) nach einem der vorhergehenden Ansprüche, **dadurch gekennzeichnet, dass** der Ventilsitz (15) in einem Zylinder gelagert ist, dessen Achse achsparallel insbesondere koaxial zur Achse des Steuerrohrs (8) angeordnet ist.

5. Coaxialventil (1) nach Anspruch 4, **dadurch gekennzeichnet, dass** der Ventilsitz (15) abdichtend im Zylinder einliegt.

6. Coaxialventil (1) nach einem der Ansprüche 2 bis 5, **dadurch gekennzeichnet, dass** ein mit dem Gehäuse fest verbundenes oder damit einstückig ausgebildetes Teil (14) den ringförmigen Ventilsitz (15) von der Steuerrohr (8) abgewandten Seite des Ventilsitzes (15) her durchgreift.

7. Coaxialventil (1) nach Anspruch 6, **dadurch gekennzeichnet, dass** das durchgreifende Teil (14) zumindest im geschlossenen Zustand des Coaxialventils (1) zumindest bereichsweise innerhalb des Steuerrohrs (8) befindlich ist, wobei das durchgreifende Teil (14) einen zylindrischen Bereich (14a) aufweist, an dem der ringförmige Ventilsitz (15) mit seiner inneren Mantelfläche, insbesondere mittels einer zusätzlichen Dichtung (16) abdichtend anliegt, und sich an den zylindrischen Bereich (14a) ein kragenförmiger Bereich (14b) anschließt, der zumindest einen Teil der stirnseitigen Fläche (A₃) des Ventilsitzes (15) übergreift und mittels einer insbesondere ringförmigen Dichtung (18) an der stirnseitigen Fläche des Ventilsitzes (15) anliegt.

8. Coaxialventil (1) nach Anspruch 6 oder 7, **dadurch gekennzeichnet, dass** der Verbindungskanal (19, 20) innerhalb des durchgreifenden Teils (14) angeordnet ist.

9. Coaxialventil (1) nach Anspruch 8, **dadurch gekennzeichnet, dass** der Verbindungskanal durch Bohrungen (19, 20) im durchgreifenden Teil (14) gebildet ist, wobei sich eine axiale Bohrung (19) vom kragenförmigen Bereich (14b) aus durch einen Teil des zylindrischen Bereichs (14a) erstreckt und eine radiale Bohrung (20) kreuzt, welche im zylindrischen Bereich (14a) angeordnet ist.

10. Coaxialventil (1) nach Anspruch 9, **dadurch gekennzeichnet, dass** der kragenförmige Bereich (14b) eine insbesondere konische Umleitfläche aufweist.

11. Coaxialventil (1) nach Anspruch 7, **dadurch gekennzeichnet, dass** der zylindrische Bereich (14a) zwei Bereiche (14a₁, 14a₂) mit unterschiedlichen Außendurchmessern aufweist, wobei der Bereich (14a₂) mit dem größeren Außendurchmesser zwischen dem kragenförmigen Bereich (14b) und dem zylindrischen Bereich (14a₁) mit kleinerem Durchmesser angeordnet ist, und der Ventilsitz (15) an beiden zylindrischen Bereichen (14a₁, 14a₂) mit unterschiedlichen Außendurchmessern jeweils mittels einer Dichtung (16₁, 16₂) abdichtend anliegt.

12. Coaxialventil (1) nach einem der Ansprüche 7 bis 11, **dadurch gekennzeichnet, dass** ein weiterer Kanal den mittels der beiden Dichtungen (16, 18 bzw. 16₁, 16₂), dem Ventilsitzelement (15) sowie dem durchgreifenden Teil (14) gebildeten Zwischenraum (22) mit der Auslaßseite des Coaxialventils (1) verbindet, wobei optional ein Rückschlagventil im Kanal angeordnet ist.

13. Coaxialventil (1) nach einem der vorhergehenden Ansprüche, **dadurch gekennzeichnet, dass** eine Ventilfeder (9) das Steuerrohr (8) in Richtung des Ventilsitzes (15) druckbeaufschlagt.

14. Coaxialventil (1) nach einem der vorhergehenden Ansprüche, **dadurch gekennzeichnet, dass** ein Ventilantrieb (6a, 6b, 7) das Steuerrohr (8) antreibt.

15. Coaxialventil (1) nach einem der vorhergehenden Ansprüche, **dadurch gekennzeichnet, dass** der Ventilsitz (15) mehrteilig ausgebildet ist, wobei der Ventilsitz eine Sitzdichtung aufweist, die mit dem Steuerrohr zusammenwirkt.

16. Coaxialventil (1) nach einem der vorhergehenden Ansprüche, **dadurch gekennzeichnet, dass** der Verbindungskanal (19, 20), welcher den Steuerrohrinhenraum (8i) und den vom Ventilsitz (15) begrenzten ringförmige Kanal (21) verbindet, eine Membran (M) aufweist, und der Verbindungskanal sowie der ringförmige Kanal mit einem Hydraulikmedium zur Druckübertragung gefüllt ist, wobei die Membran den im Steuerrohrinnenraum herrschenden Druck auf das Hydraulikmedium überträgt.

17. Coaxialventil (1) nach einem der vorhergehenden Ansprüche, **dadurch gekennzeichnet, dass** das Steuerrohr (8) an seinem dem Ventilsitz (15) zugewandten Ende zwei Bereiche (8a, 8b) mit unterschiedlichen Außendurchmessern hat, wobei der Außendurchmesser des an die Stirnseite (8s) des Steuerrohres (8) angrenzenden ersten Bereichs (8b) größer ist als der Außendurchmesser des dazu benachbarten zweiten Bereichs (8a).

18. Coaxialventil (1) nach Anspruch 17, **dadurch gekennzeichnet, dass** ein Gleitlager (13) den ersten Bereich (8b) umfaßt.

## Claims

1. Coaxial valve (1) with a housing, in which are arranged a control pipe (8) and a valve seat (15), wherein the control pipe (8) is mounted so as to be displaceable in an axial direction and interacts with its face side (8s) with the valve seat (15) in order to close the coaxial valve (1), wherein the valve seat (15) is mounted so as to be displaceable in the axial direction of the control pipe (8), and that the medium under pressure (P_{M}) in the control pipe (8) imposes pressure on the valve seat (15) in the direction of the control pipe (8), **characterised in that** a connection channel (19, 20) connects the control pipe interior (8i) to the side (15a) of the valve seat (15) facing away from the control pipe (8), and **in that** the side of the valve seat (15a) facing away from the control pipe (8) delimits a ring-shaped channel (21) which is in connection with the control pipe interior (8i) via the connection channel (19, 20) engaging through the valve seat (15).

2. Coaxial valve (1) according to Claim 1, **characterised in that** the valve seat (15) is ring-shaped, wherein the connection channel (19, 20) engages through the ring (15).

3. Coaxial valve (1) according to Claim 1 or 2, **characterised in that** the valve seat (15) has a sealing element or is formed by a sealing element.

4. Coaxial valve (1) according to any one of the preceding claims, **characterised in that** the valve seat (15) is mounted in a cylinder, the axis of which is arranged axially parallel and in particular coaxially to the axis of the control pipe (8).

5. Coaxial valve (1) according to Claim 4, **characterised in that** the valve seat (15) is located in the cylinder so as to form a seal.

6. Coaxial valve (1) according to any one of Claims 2 to 5, **characterised in that** a part (14) securely connected to the housing or formed as one piece with it, engages through the ring-shaped valve seat (15) from the side of the valve seat (15) facing away from the control pipe (8).

7. Coaxial valve (1) according to Claim 6, **characterised in that** the part (14) engaging through, at least in the closed state of the coaxial valve (1), is located at least in part inside the control pipe (8), wherein the part (14) engaging through has a cylindrical area (14a), with which the ring-shaped valve seat (15) is in contact with sealing effect with its inner casing surface, in particular by means of an additional seal (16), and connecting to the cylindrical area (14a) is a collar-shaped area (14b), which engages over at least a part of the face side surface (A₃) of the valve seat (15) and is in contact on the face side surface of the valve seat (15) by means of a seal (18), in particular ring-shaped.

8. Coaxial valve (1) according to Claim 6 or 7, **characterised in that** the connection channel (19, 20) is arranged inside the part (14) engaging through.

9. Coaxial valve (1) according to Claim 8, **characterised in that** the connection channel is formed by holes (19, 20) in the part (14) engaging through , wherein an axial hole (19) from the collar-shaped area (14b) extends out through a part of the cylindrical area (14a) and crosses a radial hole (20) which is arranged in the cylindrical area (14a).

10. Coaxial valve (1) according to Claim 9, **characterised in that** the collar-shaped area (14b) has a deflection surface, which is in particular conical

11. Coaxial valve (1) according to Claim 7, **characterised in that** the cylindrical area (14a) has two areas (14a₁, 14a₂) with different outer diameters, wherein the area (14a₂) with the larger outer diameter is arranged between the collar-shaped area (14b) and the cylindrical area (14a₁) with the smaller diameter, and the valve seat (15) is in contact with sealing effect at both cylindrical areas (14a₁, 14a₂) with differing outer diameters, in each case by means of a seal (16₁, 16₂).

12. Coaxial valve (1) according to any one of Claims 7 to 11, **characterised in that** a further channel connects the intermediate space (22), formed by means of the two seals (16, 18 and 16₁, 16₂ respectively), the valve seat element (15) and the part (14) engaging through, to the outlet side of the coaxial valve (1), wherein a non-return valve can optionally be arranged in the channel.

13. Coaxial valve (1) according to any one of the preceding claims, **characterised in that** a valve spring (9) imposes pressure on the control pipe (8) in the direction of the valve seat (15).

14. Coaxial valve (1) according to any one of the preceding claims, **characterised in that** a valve drive (6a, 6b, 7) drives the control pipe (8).

15. Coaxial valve (1) according to any one of the preceding claims, **characterised in that** the valve seat (15) is designed as multi-part, wherein the valve seat has a seat seal which interacts with the control pipe.

16. Coaxial valve (1) according to any one of the preceding claims, **characterised in that** the connection channel (19, 20), which connects the control pipe interior (8i) and the ring-shaped channel (21) delimited by the valve seat (15), has a membrane (M) and the connection channel and the ring-shaped channel is filled with a hydraulic medium for pressure transfer, wherein the membrane transfers the pressure prevailing in the interior of the control pipe onto the hydraulic medium.

17. Coaxial valve (1) according to any one of the preceding claims, **characterised in that** the control pipe (8) has two areas (8a, 8b) at its end facing the valve seat (15) with different outer diameters, wherein the outer diameter of the first area (8b) adjacent to the face side (8s) of the control pipe (8) is greater than the outer diameter of the adjacent second area (8a).

18. Coaxial valve (1) according to Claim 17, **characterised in that** a slide bearing (13) encompasses the first area (8b).

## Revendications

1. Soupape coaxiale (1) avec un carter dans lequel sont disposés un tube de commande (8) et un siège de soupape (15), le tube de commande (8) étant positionné de manière à pouvoir se déplacer dans la direction axiale et coopérant avec sa face frontale (8s) avec le siège de soupape (15) pour obturer la soupape coaxiale (1), le siège de soupape (15) étant positionné de manière à pouvoir se déplacer dans la direction axiale du tube de commande (8), et le fluide sous pression (P_{M}) dans le tube de commande (8) alimentant en pression le siège de soupape (15) dans la direction du tube de commande (8), **caractérisé en ce qu'**un conduit de liaison (19, 20) relie l'intérieur du tube de commande (8i) avec le côté (15a) du siège de soupape (15) opposé au tube de commande (8) et **en ce que** le côté du siège de soupape (15a) opposé au tube de commande (8) délimite un conduit annulaire (21) qui communique avec l'intérieur du tube de commande (8i) par l'intermédiaire du canal de liaison (19, 20) traversant le siège de soupape (15).

2. Soupape coaxiale (1) selon la revendication 1, **caractérisé en ce que** le siège de soupape (15) a la forme d'un anneau, le canal de liaison (19, 20) traversant l'anneau (15).

3. Soupape coaxiale (1) selon la revendication 1 ou 2, **caractérisé en ce que** le siège de soupape (15) comporte un élément d'étanchéité ou est constitué par un élément d'étanchéité.

4. Soupape coaxiale (1) selon l'une quelconque des revendications précédentes, **caractérisé en ce que** le siège de soupape (15) est logé dans un cylindre dont l'axe est disposé parallèlement, en particulier coaxialement, à l'axe du tube de commande (8).

5. Soupape coaxiale (1) selon la revendication 4, **caractérisé en ce que** le siège de soupape (15) est posé dans le cylindre de manière à assurer l'étanchéité.

6. Soupape coaxiale (1) selon l'une quelconque des revendications 2 à 5, **caractérisé en ce qu'**un élément (14) assemblé fixement avec le carter ou en une seule partie avec celui-ci traverse le siège de soupape (15) en forme d'anneau à partir du côté du siège de soupape (15) opposé au tube de commande (8).

7. Soupape coaxiale (1) selon la revendication 6, **caractérisé en ce que** l'élément traversant (14), au moins à l'état fermé de la soupape coaxiale (1), est placé à l'intérieur du tube de commande (8) au moins par segments, l'élément traversant (14) comportant une zone cylindrique (14a) sur laquelle s'appuie le siège de soupape (15) en forme d'anneau avec sa surface d'enveloppe intérieure, en particulier à l'aide d'une garniture d'étanchéité supplémentaire (16), et une zone en forme de collet (14b), qui chevauche au moins une portion de la surface du côté frontal (A₃) du siège de soupape (15) et qui s'appuie sur la surface du côté frontal du siège de soupape (15) à l'aide d'une garniture d'étanchéité (18), en particulier en forme d'anneau, étant raccordée à la zone cylindrique (14a).

8. Soupape coaxiale (1) selon la revendication 6 ou 7, **caractérisé en ce que** le conduit de liaison (19, 20) est disposé à l'intérieur de l'élément traversant (14).

9. Soupape coaxiale (1) selon la revendication 8, **caractérisé en ce que** le conduit de liaison est formé par des alésages (19, 20) dans l'élément traversant (14), un alésage axial (19) s'étendant à partir de la zone en forme de collet (14b) à travers une partie de la zone cylindrique (14a) et croisant un alésage radial (20) qui est disposé dans la zone cylindrique (14a).

10. Soupape coaxiale (1) selon la revendication 9, **caractérisé en ce que** la zone en forme de collet (14b) comporte une surface de dérivation, en particulier conique.

11. Soupape coaxiale (1) selon la revendication 7, **caractérisé en ce que** la zone cylindrique (14a) comporte deux zones (14a₁, 14a₂) avec des diamètres externes différents, la zone (14a₂) avec le diamètre plus grand étant disposée entre la zone en forme de collet (14b) et la zone cylindrique (14a₁) avec le diamètre plus petit et le siège de soupape (15) s'appuyant de manière à assurer l'étanchéité sur les deux zones cylindrique (14a₁, 14a₂) avec des diamètres différents à l'aide d'une garniture d'étanchéité (16₁, 16₂).

12. Soupape coaxiale (1) selon l'une quelconque des revendications 7 à 11, **caractérisé en ce qu'**un autre conduit relie l'espace intermédiaire (22) formé au moyen des deux garnitures d'étanchéité (16, 18 ou 16₁, 16₂), de l'élément de siège de soupape (15) ainsi que de l'élément traversant (14) avec le côté d'évacuation de la soupape coaxiale (1), une soupape anti-retour étant disposée, de manière optionnelle, dans le conduit.

13. Soupape coaxiale (1) selon l'une quelconque des revendications précédentes, **caractérisé en ce qu'**un ressort de soupape (9) sollicite le tube de commande (8) dans la direction du siège de soupape (15).

14. Soupape coaxiale (1) selon l'une quelconque des revendications précédentes, **caractérisé en ce qu'**un mécanisme d'entraînement de soupape (6a, 6b, 7) entraîne le tube de commande (8).

15. Soupape coaxiale (1) selon l'une quelconque des revendications précédentes, **caractérisé en ce que** le siège de soupape (15) est construite en plusieurs parties, le siège de soupape comportant une étanchéité de siège qui coopère avec le tube de commande.

16. Soupape coaxiale (1) selon l'une quelconque des revendications précédentes, **caractérisé en ce que** le conduit de liaison (19, 20), qui relie l'intérieur du tube de commande (8i) et le conduit annulaire (21) délimité par le siège de soupape (15), comporte une membrane (M) et **en ce que** le conduit de liaison ainsi que le conduit en forme d'anneau est rempli avec un fluide hydraulique pour le transfert de pression, la membrane transférant la pression qui règne à l'intérieur du tube de commande au fluide hydraulique.

17. Soupape coaxiale (1) selon l'une quelconque des revendications précédentes, **caractérisé en ce que** le tube de commande (8), à son extrémité dirigée vers le siège de soupape (15), comporte deux zones (8a, 8b) avec des diamètres externes différents, le diamètre externe de la première zone (8b) adjacente à la face frontale (8s) du tube de commande (8) étant supérieur au diamètre externe de la seconde zone (8a) adjacente à celle-ci.

18. Soupape coaxiale (1) selon la revendication 17, **caractérisé en ce qu'**un palier lisse (13) entoure la première zone (8b).
